# EUROPÄISCHE PATENTSCHRIFT

(11) **EP 2 039 966 B1**
(45) Veröffentlichungstag und Bekanntmachung des Hinweises auf die Patenterteilung: **24.03.2010**
(21) Anmeldenummer: 07018333.0
(22) Anmeldetag: 19.09.2007
(51) Int. Cl.: F16J 3/04, B23Q 11/08

(54) **Balgeinrichtung**
Bellows device
Dispositif de soufflet

(43) Veröffentlichungstag der Anmeldung: 25.03.2009
(73) Patentinhaber: Möller Werke GmbH, 33649 Bielefeld (DE)
(72) Erfinder: Redeker, Bernd, 33758 Schloss Holte-St. (DE)
(74) Vertreter: Schober, Mirko

(56) Entgegenhaltungen:
- DE-A1- 10 137 803
- DE-B3-102005 030 717
- DE-U1- 7 720 178

## Beschreibung

Die Erfindung betrifft eine Balgeinrichtung nach dem Oberbegriff von Anspruch 1. Eine solche Balgeinrichtung ist bekannt aus z.B. DE 77 20 178 U1.

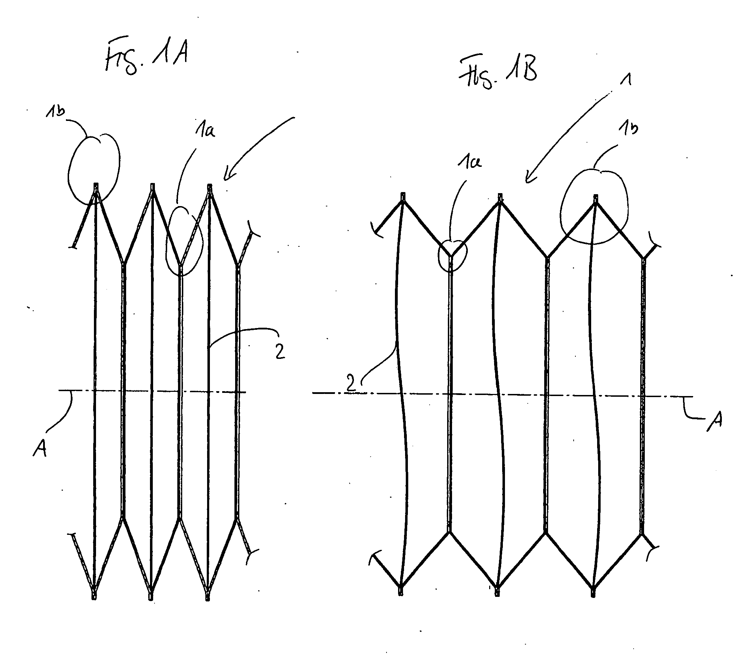

Eine entsprechende Balgeinrichtung ist in den Figuren 1A und 1B gezeigt. Dargestellt ist eine Balgeinrichtung mit Stützelementen nach dem Stand der Technik im zusammengeschobenen Zustand (Figur 1A) bzw. im ausgezogenen Zustand (Figur 1B). Entsprechende Bälge, die sich ausziehen bzw. zusammenschieben lassen, können die Stützelemente 2 benötigen, damit die Falten 1a, 1b des Balges beim Auseinanderziehen nicht einfallen oder Beulen im Balgmaterial entstehen können, sondern die Balgform in allen Auszugszuständen erhalten bleibt und damit eine weitere ordnungsgemäße Benutzung des Balgs gewährleistet ist.

Solche Stützelemente 2 bestehen in der Regel aus starrem Kunststoff oder Metall und werden in die Außenfalten des Balges eingesetzt. Durch ihre Starrheit können bei diesen Stützelementen 2 ein erheblicher Abrieb am Balgmaterial und auch eine starke Beanspruchung der Nahtverbindungen verursacht werden. Bei einigen Ausführungsformen werden die Stützelemente 2 mit dem Balgmaterial 1 fest vernäht oder verschweißt. Je nach Balgform wird die Fähigkeit, den Balg auszuziehen (Figur 1B) bzw. zusammenzuschieben (Figur1A) durch die Stützelemente 2 begrenzt. Zudem ist das Herstellen entsprechender Bälge aufwendig, weil die Anbringung der Stützelemente zusätzliche Arbeitsschritte und erhöhte Präzision bei der Balgherstellung erfordert.

Der Erfindung liegt daher die Aufgabe zugrunde, eine Balgeinrichtung anzugeben, bei der die erwähnten Nachteile nicht auftreten.

Gelöst wird diese Aufgabe mit den Merkmalen des Anspruchs 1. Vorteilhafte Ausführungsformen finden sich in den abhängigen Ansprüchen.

Erfindungsgemäß weist das Stützelement an einem dem Balgmaterial zugewandten Bereich einen Ausgleichsabschnitt auf. Dieser bevorzugt als flexibler Randabschnitt ausgebildete Ausgleichsabschnitt umgibt das Stützelement wenigstens abschnittweise. Das Stützelement ist dabei zusammen mit dem Ausgleichsabschnitt in eine Außenfalte des Balgs lose eingelegt. Beim Strecken des Balgs kann der Ausgleichsabschnitt durch die hierbei auftretende radiale Stauchung des Balgs in Anlage an die Außenfalte gelangen, wobei der Ausgleichsabschnitt die radial zur Balgachse hin erfolgende Bewegung der Faltenspitze aufnimmt und elastisch abstützt. Bevorzugt besteht der Ausgleichsabschnitt dabei aus einem elastischen Material, bevorzugt Gummi oder einem elastischen Kunststoff, wie z.B. Polyurethan, und kann z.B. im Spritzgußverfahren hergestellt sein. Die Stützelemente, die bevorzugt aus Metallblech oder Kunststoff oder einem Material, mit gegenüber dem Ausgleichsabschnitt im wesentlichen starren Eigenschaften, bestehende Bereiche aufweisen, verhindern so lediglich das Einbeulen des Balgmaterials, sonst bleibt die Beweglichkeit der Faltenspitzen weitestgehend unabhängig vom Stützelement, so daß Behinderungen beim Gebrauch des Balgs vermieden werden.

Bevorzugt ist vorgesehen, daß der Ausgleichsabschnitt das Stützelement wenigstens im ausgezogenen Zustand der Balgeinrichtung vom Balgmaterial weg vorspannt, wobei der Ausgleichsabschnitt so ausgelegt sein kann, daß er sich beim Auseinanderziehen der Balgeinrichtung wölbt. Bevorzugt weist der Ausgleichsabschnitt eine Wölbung in Richtung der Balglängsachse auf, deren Ausprägung sich beim Auseinanderziehen der Balgeinrichtung verstärkt und beim Zusammenschieben der Balgeinrichtung verringert oder verschwindet.

Die Figuren 1A und 1B zeigen eine Balgeinrichtung nach dem Stand der Technik.

Die Figuren 2A und 2B zeigen eine erfindungsgemäße Balgeinrichtung im zusammengezogenen Zustand (Figur 2A) bzw. im ausgezogenen Zustand (Figur 2B).

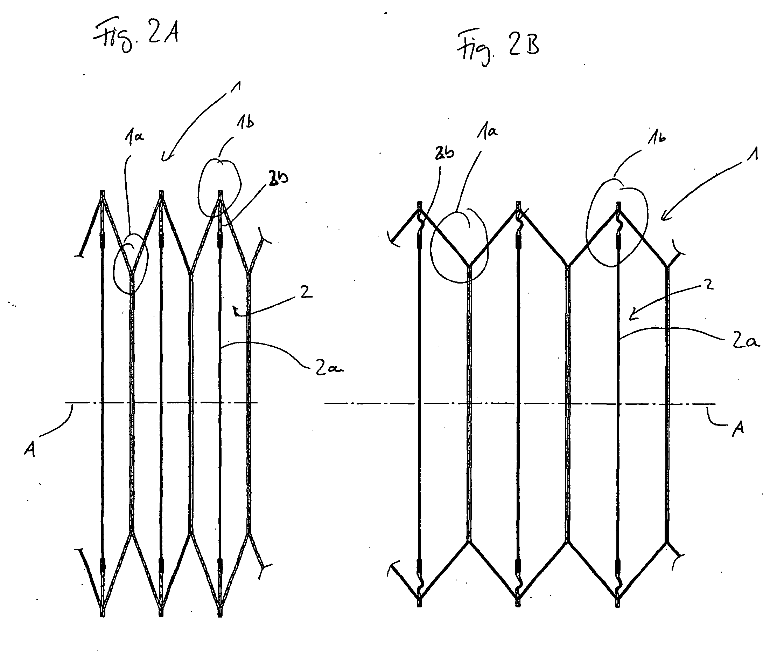

Die Erfindung wird nachfolgend anhand der Zeichnungen in den Figuren 2A und 2B schematisch näher erläutert:

Die erfindungsgemäße Balgeinrichtung weist ein Innenfalten 1a und Außenfalten 1b bildendes Balgmaterial 1 auf. Im vorliegenden Beispiel handelt es sich um eine Balgeinrichtung, welche zur Balglängsachse A rotationssymmetrisch ist, hiervon abweichende Balgformen sind jedoch auch denkbar. In dem Bereich der Außenfalten 1b sind Stützelemente 2 vorgesehen, welche einen im wesentlichen starren mittleren Bereich 2a aufweisen und auf der dem Balgmaterial 1 zugewandten Seite wenigstens abschnittweise von einem flexiblen Ausgleichsabschnitt 2b begrenzt sind. Bevorzugt sind der Ausgleichsabschnitt 2b und der übrige Bereich 2a lösbar miteinander verbunden. Der Ausgleichsabschnitt 2b kann beispielsweise in Kragenform auf das Element 2a aufgesteckt sein.

Erfindungsgemäß ist nun vorgesehen, daß das so ausgebildete Stützelement 2 lose in dem Bereich der Außenfalte 1b eingelegt ist. Das so eingelegte Stützelement 2 liegt im zusammengezogenen Zustand (Figur 2A) in der umlaufenden Außenfalte 1b, so daß es in diesem Zustand nicht von selbst aus der vorgesehen Position herausfallen kann. Bevorzugt ist der Ausgleichsabschnitt 2b so ausgelegt, daß er für eine Vorspannung des Stützelements 2 gegen das Balgmaterial 1 sorgt. Wird die Balgeinrichtung auseinandergezogen (Figur 2B), so wird der Ausgleichsabschnitt 2a verformt (gewölbt), da sich die Außenfalten 1b zur Balgachse A radial nach innen bewegen. Der gegenüber dem Ausgleichsabschnitt 2b im wesentlichen starre Bereich 2a des Stützelementes 2 verändert seine Lage kaum bzw. überhaupt nicht. Die Verformung des Balgmaterials 1 wird vom Ausgleichsabschnitt 2b kompensiert.

Durch das nur lose Einlegen der erfindungsgemäßen Stützelemente können die Balgeinrichtungen auch nachträglich mit Stützelementen bestückt oder es können ggf. defekte Stützelemente einfach ausgetauscht werden. Neben der Nachrüstmöglichkeit ist somit auch eine einfache Montage der erfindungsgemäßen Stützelemente möglich, so daß ein aufwendiges Herstellungsverfahren, bei welchem die Stützelemente mit dem Balgmaterial verbunden, insbesondere vernäht oder verschweißt werden müssen, nicht erforderlich ist.

## Patentansprüche

1. Balgeinrichtung mit einem um eine zentrale Balglängsachse (A) herum angeordneten Balgmaterial (1), welches um die Balglängsachse (A) umlaufende Innenfalten (1a) und Außenfalten (1b) aufweist, und wenigstens einem etwa senkrecht zur Balglängsachse (A) angeordneten. Stützelement (2) zur Unterstützung der Innen- und/oder Außenfalten (1a, 1b),
**dadurch gekennzeichnet,**
**daß** das wenigstens eine Stützelement (2) an einem dem Balgmaterial (1) zugewandten Bereich einen Ausgleichsabschnitt (2b) aufweist, welcher das Stützelement (2) wenigstens abschnittweise umgibt, und das wenigstens eine, mit dem Ausgleichsabschnitt (2b) ausgebildete Stützelement (2) in eine Außenfalte (1b) lose eingelegt ist.

2. Balgeinrichtung nach Anspruch 1,
**dadurch gekennzeichnet,**
**daß** der Ausgleichsabschnitt (2b) aus einem elastischen Material besteht.

3. Balgeinrichtung nach Anspruch 1 oder 2,
**dadurch gekennzeichnet,**
**daß** der Ausgleichsabschnitt (2b) das Stützelement (2) wenigstens im ausgezogenen Zustand der Balgeinrichtung vom Balgmaterial (1) weg vorspannt.

4. Balgeinrichtung nach einem der vorherigen Ansprüche,
**dadurch gekennzeichnet,**
**daß** der Ausgleichsabschnitt (2b) so ausgelegt ist, daß er sich beim Auseinanderziehen der Balgeinrichtung wölbt.

5. Balgeinrichtung nach einem der Ansprüche 1 bis 3,
**dadurch gekennzeichnet,**
**daß** der Ausgleichsabschnitt (2b) eine Wölbung in Richtung der Balglängsachse (A) aufweist, deren Ausprägung sich beim Auseinanderziehen der Balgeinrichtung verstärkt und beim Zusammenschieben der Balgeinrichtung verringert oder verschwindet.

6. Balgeinrichtung nach einem der vorherigen Ansprüche,
**dadurch gekennzeichnet,**
**daß** der Ausgleichsabschnitt (2b) aus Gummi oder elastischem Kunststoff, insbesondere Polyurethan, besteht.

7. Balgeinrichtung nach einem der vorherigen Ansprüche,
**dadurch gekennzeichnet,**
**daß** der Ausgleichsabschnitt (2b) im Spritzgußverfahren hergestellt ist.

8. Balgeinrichtung nach einem der vorherigen Ansprüche,
**dadurch gekennzeichnet,**
**daß** das Stützelement (2) einen aus Metallblech oder Kunststoff oder einem Material mit gegenüber dem Ausgleichsabschnitt (3) im wesentlichen starren Eigenschaften bestehenden Bereich (2a) aufweist.

## Claims

1. Bellows device with a bellows material (1) arranged around a central bellows longitudinal axis (A), said bellows material (12) comprising inner pleats (1a) surrounding the bellows longitudinal axis (A) and outer pleats (1b), and with at least one support element (2) arranged approximately perpendicular to the bellows longitudinal axis (A) for supporting the inner and outer pleats (1a, 1b),
**characterised in that**
the at least one support element (2) comprises on a region facing the bellows material (1) a compensating section (2b) which surrounds the support element (2) at least in sections, and the at least one support element (2) formed with the compensating section (2b) is loosely placed in an outer pleat (1b).

2. Bellows device according to claim 1,
**characterised in that**
the compensating section (2b) consists of an elastic material.

3. Bellows device according to claim 1 or 2,
**characterised in that**
the compensating section (2b) pretensions the support element (2) away from the bellows material (1) at least in the extended state of the bellows device.

4. Bellows device according to one of the preceding claims,
**characterised in that**
the compensating section (2b) is designed so that it cambers upon extension of the bellows device.

5. Bellows device according to one of the claims 1 to 3,
**characterised in that**
the compensating section (2b) comprises a camber in the direction of the bellows longitudinal axis (A), the shaping of which is reinforced during extension of the bellows device and is reduced or disappears during compression of the bellows device.

6. Bellows device according to one of the preceding claims,
**characterised in that**
the compensating section (2b) consists of rubber or elastic plastic, in particular polyurethane.

7. Bellows device according to one of the preceding claims,
**characterised in that**
the compensating section (2b) is produced in an injecting moulding process.

8. Bellows device according to one of the preceding claims,
**characterised in that**
the support element (2) comprises a region (2a) consisting of sheet metal or plastic or a material with essentially rigid properties in relation to the compensating section (3).

## Revendications

1. Dispositif de soufflet avec un matériau (1) formant le soufflet, qui, disposé autour d'un axe longitudinal, central (A) du soufflet, présente des plis intérieurs (1a) et des plis extérieurs (1b), qui entourent l'axe longitudinal (A) du soufflet, et avec au moins un élément de support (2), disposé à peu près perpendiculairement par rapport à l'axe longitudinal (A) du soufflet, pour soutenir les plis intérieurs et / ou les plis extérieurs (1a, 1b),
**caractérisé en ce que**
l'élément de support (2), au moins prévu, présente, dans une zone orientée vers le matériau (1) formant le soufflet, une section de compensation (2b), qui entoure, au moins par sections, l'élément de support (2), et que l'élément de support (2), au moins prévu, pourvu de la section de compensation (2b), est inséré lâchement dans un pli extérieur (1b).

2. Dispositif de soufflet selon la revendication 1,
**caractérisé en ce que**
la section de compensation (2b) consiste en une matière élastique.

3. Dispositif de soufflet selon revendication 1 ou 2,
**caractérisé en ce que**
la section de compensation (2b) précontraint l'élément de support (2) en l'éloignant du matériau (1) formant le soufflet, au moins lors de l'extension du dispositif de soufflet.

4. Dispositif de soufflet selon l'une des revendications précédentes,
**caractérisé en ce que**
la section de compensation (2b) est conçue de sorte qu'elle se voûte lors de l'extension du dispositif de soufflet.

5. Dispositif de soufflet selon l'une des revendications 1 à 3,
**caractérisé en ce que**
la section de compensation (2b) présente, en direction de l'axe longitudinal (A) du soufflet, une courbe, dont l'importance augmente lors de l'extension du dispositif de soufflet et diminue ou disparait lors de la rétraction du dispositif de soufflet.

6. Dispositif de soufflet selon l'une des revendications précédentes,
**caractérisé en ce que**
la section de compensation (2b) consiste en caoutchouc ou en matière synthétiques élastique, particulièrement en polyuréthane.

7. Dispositif de soufflet selon l'une des revendications précédentes,
**caractérisé en ce que**
la section de compensation (2b) est fabriquée selon le procédé de moulage par injection.

8. Dispositif de soufflet selon l'une des revendications précédentes,
**caractérisé en ce que**
l'élément de support (2) présente une zone (2a) consistant en tôle métallique ou en matière plastique ou en une matière possédant des propriétés sensiblement rigides par rapport à la section de compensation (2b).
